# EUROPEAN PATENT SPECIFICATION

(11) **EP 2 448 800 B1**
(45) Date of publication and mention of the grant of the patent: **14.08.2019**
(21) Application number: 10794455.5
(22) Date of filing: 23.06.2010
(51) Int. Cl.: B60T 10/02, B60T 17/02

(54) **DEVICE AND METHOD FOR CONTROLLING AN OPERATION OF A RETARDER IN A MOTOR VEHICLE**
VORRICHTUNG UND VERFAHREN ZUR STEUERUNG DES BETRIEBS EINES VERZÖGERUNGSELEMENTS IN EINEM KRAFTFAHRZEUG
DISPOSITIF ET PROCÉDÉ POUR COMMANDER UN FONCTIONNEMENT D'UN RALENTISSEUR DANS UN VÉHICULE À MOTEUR

(30) Priority: 01.07.2009 SE 0950512
(43) Date of publication of application: 09.05.2012
(73) Proprietor: Scania CV AB, 151 87 Södertälje (SE)
(72) Inventor: SELLING, Tomas, S-120 51 Årsta (SE); SANNELIUS, Mikael, S-125 33 Älvsjö (SE)
(74) Representative: Scania CV AB
(86) International application number: PCT/SE2010/050713
(87) International publication number: WO 2011/002400

(56) References cited:
- EP-A1- 1 380 485
- EP-B1- 0 873 925
- EP-B1- 0 873 925
- WO-A1-02/32735
- WO-A1-02/32735
- WO-A1-2004/048172
- FR-A1- 2 875 968
- JP-A- 10 136 636

## Description

### TECHNICAL FIELD

The present invention relates to a method for controlling retarder operation of a motor vehicle. The invention relates also to a computer programme product comprising programme code for a computer for implementing a method according to the invention. The invention relates also to a device for controlling retarder operation of a motor vehicle and to a motor vehicle equipped with the device.

### BACKGROUND

Certain of today's vehicles are equipped with a hydrodynamic supplementary brake known as a retarder. The retarder oil of the retarder is cooled by a retarder cooler when the oil flows in a closed system between the retarder and the retarder cooler. The retarder cooler is cooled by a cooling system comprising a cooler of the vehicle and a coolant circulating in the cooling system.

A temperature sensor currently situated downstream of the retarder cooler is adapted to measuring the temperature of the retarder oil after it has been cooled by the retarder cooler.

Cases where it is desirable to move the temperature sensor to upstream of the retarder cooler, e.g. for reasons of space, result in certain undesirable consequences.

An undesirable consequence of moving the temperature sensor from downstream of the retarder cooler to upstream of the retarder cooler is that the limit values which are relevant to the temperature values measured on the downstream side and are used for activating a limitation of the retarder's braking torque are no longer relevant to the temperature values measured on the upstream side.

Relocating the temperature sensor to upstream of the retarder cooler means that a longer time is taken to detect whether any fault in the cooling of the retarder cooler has occurred, e.g. that a coolant line has become detached from the vehicle cooler or the retarder cooler, or whether a coolant line is leaking.

This delay in fault detection is of course undesirable in that a cooling system fault of the kind mentioned above will result in the temperature of the retarder oil rising quite quickly if it is not cooled effectively. In certain situations the temperature of the retarder oil may increase by 10 degrees Celsius per second. A fault in the cooling system may result in the retarder oil reaching its spontaneous ignition temperature, with potentially disastrous consequences for both driver, passengers and other road users and the vehicle itself.

The temperature sensor has an inherent characteristic which causes delay in sensor warming. This means that an undesirable reduction in the retarder's torque may be activated if too low a limit value is set for it. On the other hand, setting the limit value for activation of reduction of the retarder's torque too high will increase the risk of spontaneous ignition when a fault occurs in the cooling of the retarder cooler.

There is a need to deal with the above disadvantages and provide a robust device which reduces the risk of unwanted activation of safety measures and which at the same time reduces the risk of spontaneous ignition of the retarder oil when a fault occurs in the cooling system.

EP 0873925 describes a method and a device for limiting the braking action of a retarder of a motor vehicle.

### SUMMARY OF THE INVENTION

An object of the present invention is to propose a novel and advantageous method for controlling retarder operation of a motor vehicle.

Another object of the invention is to propose an alternative method, a device and a computer programme for controlling retarder operation of a motor vehicle.

A further object of the invention is to propose a method, a device and a computer programme for achieving more robust control of retarder operation of a motor vehicle.

A further object of the invention is to propose a method, a device and a computer programme for achieving a motor vehicle comprising a retarder with enhanced safety.

These objects are achieved with a method for controlling retarder operation of a motor vehicle according to claim 1.

An aspect of the invention proposes a method for controlling retarder operation of a motor vehicle, comprising the steps of:
- continuously detecting temperatures of the retarder's fluid;
- continuously determining a change in the detected temperature;
- automatically disconnecting the operation of the retarder when said detected temperature exceeds a predetermined temperature, to which end
- said predetermined temperature is determined continuously on the basis of the magnitude of the change per unit time.

With advantage, dynamic emergency shutdown of the vehicle's retarder is provided. Setting a variable limit for disconnecting the retarder's operation on the basis of how the temperature of its fluid changes per unit time affords a number of advantages.

In a situation where the cooling of the retarder's fluid does not function correctly, the temperature of the fluid rises in an undesirable way. This can be detected effectively according to the invention. According to the invention the predetermined temperature may be lowered automatically on the basis of a certain change in the detected temperature. This means that the disconnection of the retarder's operation can be activated earlier than if the predetermined value was constant over time. Thus the temperature of the retarder's fluid will be at a lower actual value, also called its current value, upon activation of the change by disconnection of operation, as compared with if the predetermined value was constant over time. The result is a safer device for controlling retarder operation of the motor vehicle according to the invention.

During normal operation of the vehicle and the retarder there is a good margin between detected temperatures of the retarder's fluid and the predetermined temperature at which disconnection of the retarder's operation is activated. During operation of the vehicle when the cooling of the retarder's fluid does not function appropriately there is a smaller margin between detected temperatures of the fluid and the predetermined temperature at which disconnection of the retarder's operation is activated. The innovative method is therefore robust.

The method is easy to implement in existing motor vehicles. Software for controlling retarder operation of a motor vehicle according to the invention can be installed in a control unit of the vehicle during manufacture of the vehicle. A purchaser of the vehicle may thus have the possibility of selecting the function of the method as an option. Alternatively, software comprising programme code for effecting the innovative method for controlling retarder operation of a motor vehicle may be installed in a control unit of the vehicle on the occasion of upgrading at a service station, in which case the software may be loaded into a memory in the control unit. Implementing the innovative method is therefore cost-effective, particularly as, for example, no further temperature sensors need be installed in the vehicle according to an aspect of the invention. Relevant hardware is currently already provided in the vehicle. The invention therefore represents a cost-effective solution to the problems indicated above.

Software comprising programme code for controlling retarder operation of a motor vehicle is easy to update or replace. Various parts of the software comprising programme code for controlling retarder operation of a motor vehicle can also be replaced independently of one another. This modular configuration is advantageous from a maintenance perspective.

Said predetermined temperature can be determined dynamically on the basis of the magnitude of the change per unit time in such a way that said predetermined temperature is lowered when the magnitude of the change increases.

Said predetermined temperature may vary within a range of 180-250 degrees Celsius or a range of 190-210 degrees Celsius.

The predetermined temperature may be determined so that there is a predetermined margin between the predetermined temperature and the detected temperature of the retarder's fluid during steady state operation of the retarder.

Only one already present temperature sensor is used according to this version, resulting in a cost-effective device for controlling retarder operation of a motor vehicle. The temperature sensor may be adapted to measuring the retarder's fluid upstream of the retarder cooler.

An aspect of the invention proposes a device for controlling retarder operation of a motor vehicle, comprising
- receiving means for continuously receiving signals containing information about detected temperatures of the retarder's fluid;
- calculation means for continuously determining a change in the detected temperature;
- control means for automatically disconnecting the retarder's operation when said temperature exceeds a predetermined temperature, and
- calculation means for continuously determining said predetermined temperature on the basis of the magnitude of the change per unit time.

The calculation means may be adapted to dynamically determining said predetermined temperature on the basis of the magnitude of the change per unit time in such a way that said predetermined temperature is lowered when the temperature of the retarder's fluid increases, and that said predetermined temperature is raised when the temperature of the retarder's fluid decreases.

Said predetermined temperature may vary within a range of 180-250 degrees Celsius or a range of 190-210 degrees Celsius.

The calculation means may be adapted to determining the predetermined temperature so that there is a predetermined margin between the predetermined temperature and the detected temperature of the retarder's fluid during steady state operation of the retarder.

The above objects are also achieved with a motor vehicle which comprises the features of the device for controlling retarder operation of a motor vehicle. The vehicle may be a truck, a bus or a passenger car.

An aspect of the invention proposes a computer programme for controlling retarder operation of a motor vehicle, which computer programme comprises programme code stored on a computer-readable medium for causing an electronic control unit or another computer connected to the electronic control unit to perform the steps according to any one of claims 1-5.

An aspect of the invention proposes a computer programme product comprising a programme code stored on a computer-readable medium for performing the method steps according to any one of claims 1-5 when said computer programme is run on an electronic control unit or another computer connected to the electronic control unit.

Further objects, advantages and novel features of the present invention will become apparent to one skilled in the art from the following details, and also by putting the invention into practice. Whereas the invention is described below, it should be noted that it is not limited to the specific details described. Specialists having access to the teachings herein will recognise further applications, modifications and incorporations within other fields, which are within the scope of the invention.

### BRIEF DESCRIPTION OF THE DRAWINGS

For fuller understanding of the present invention and further objects and advantages of it, the detailed description set out below should be read together with the accompanying drawings, in which the same reference notations denote similar items in the various diagrams, and in which:
Figure 1 is a schematic vehicle according to an embodiment of the invention;
Figure 2 is a schematic subsystem for the vehicle depicted in Figure 1, according to an embodiment of the invention;
Figure 3 is a schematic diagram in which a principle of the invention is indicated;
Figure 4a is a schematic flowchart of a method for controlling retarder operation of a motor vehicle, according to an embodiment of the invention;
Figure 4b is a schematic flowchart in more detail of a method for controlling retarder operation of a motor vehicle, according to an embodiment of the invention; and
Figure 5 is a schematic computer according to an embodiment of the invention.

### DETAILED DESCRIPTION OF EMBODIMENT EXAMPLES

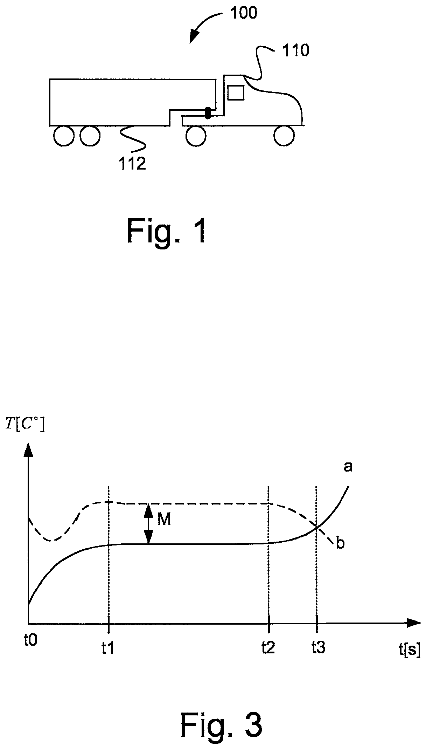

Figure 1 depicts a side view of a vehicle 100. The exemplified vehicle 100 comprises a tractor unit 110 and a trailer 112. The vehicle may be a heavy vehicle, e.g. a truck or a bus. The vehicle may alternatively be a passenger car.

The term "link" refers herein to a communication link which may be a physical connection such as an opto-electronic communication line, or a non-physical connection such as a wireless connection, e.g. a radio link or microwave link.

The term "line" refers herein to a line for conveying a fluid, e.g. a coolant or retarder oil. The line is a physical line, e.g. a pipe or a hose. It may be of any desired size. It may also be made of any desired suitable material, e.g. rubber or plastic. The line may alternatively be made of metal or metal alloy, e.g. aluminium or stainless steel.

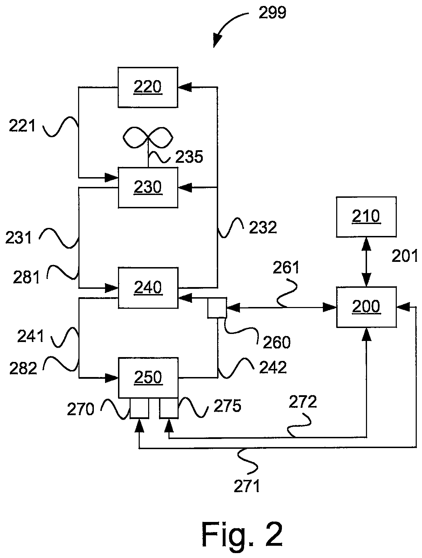

Figure 2 depicts schematically a subsystem 299 for the motor vehicle 100 depicted in Figure 1. The subsystem 299 comprises a vehicle cooler 220 connected to an engine 230 via a line 221. The engine 230 is provided with a cooling fan 235.

The engine 230 is connected to a retarder cooler 240 via a line 231. The retarder cooler 240 is connected to the engine 230 and the vehicle cooler 220 via a manifold line 232.

The retarder cooler 240 is connected to a retarder 250 via a line 241. Retarder 250 may also be called hydrodynamic supplementary brake. The retarder 250 is connected to the retarder cooler 240 via a line 242.

The subsystem 299 illustrated in Figure 2 contains two different fluids, viz. a first fluid 281 and a second fluid 282. The first fluid 281 is in a first closed circuit which incorporates the connecting lines between the vehicle cooler 220, the engine 230 and the retarder cooler 240, viz. lines 221, 231 and 232. The first circuit conveys the first fluid 281 from the vehicle cooler 220 via the engine 230 to the retarder cooler 240 and back.

The vehicle cooler 220 is adapted to using air from the surroundings of the vehicle to cool the first fluid 281 of the vehicle cooler 220. Said first fluid may be any desired fluid, e.g. coolant. The coolant may be a mixture of water and glycol.

The subsystem 299 is adapted to using first pump means (not depicted) to effect flow of said first fluid. The pump means are adapted to effecting flow of said first fluid as illustrated by arrows in Figure 2, i.e. anticlockwise. Said first fluid is thus cooled in the vehicle cooler and is led to the engine 230 to cool the engine.

The cooling fan 235 is adapted to using air from the surroundings of the vehicle to further cool said first fluid of the engine 230.

After it has passed through, and has thereby cooled, the engine 230, said first fluid 281 is led on to the retarder cooler 240, in which a heat exchange process takes place between said first fluid 281 and the second fluid 282, which is in a second closed circuit of the subsystem 299.

Said first fluid is intended to be led from the retarder cooler 240 to both the engine 230 and the vehicle cooler 220. A first portion of the first fluid is thus led back from the retarder cooler 240 to the engine 230, and a second portion of the first fluid 281 is led back to the vehicle cooler 220.

The second fluid 282 is in a second closed circuit which leads it from the retarder cooler 240 to the retarder 250 and back.

The subsystem 299 is adapted to using second pump means (not depicted) to effect flow of said second fluid 282. The pump means are adapted to effecting flow of said second fluid 282 as illustrated by arrows in Figure 2, i.e. anticlockwise. Said second fluid 282 is thus cooled in the retarder cooler 240 and is led back to the retarder 250.

The second fluid 282 may be any desired fluid. It is preferably a retarder oil with desirable characteristics. There is a reservoir for the second fluid 282 in the retarder 250.

A temperature sensor 260 placed on line 242 is preferably situated close to an inlet for the second fluid 282 in the retarder cooler 240. It should be noted that the temperature sensor 260 is adapted to measuring the temperature of the second fluid 282 after it has been warmed in the retarder 250. The temperature sensor 260 is adapted to measuring the temperature of the second fluid 282 downstream of the retarder 250. The temperature sensor 260 is adapted to continuously measuring the temperature of the second fluid 282 and continuously communicating measured values to a first control unit 200 via a link 261.

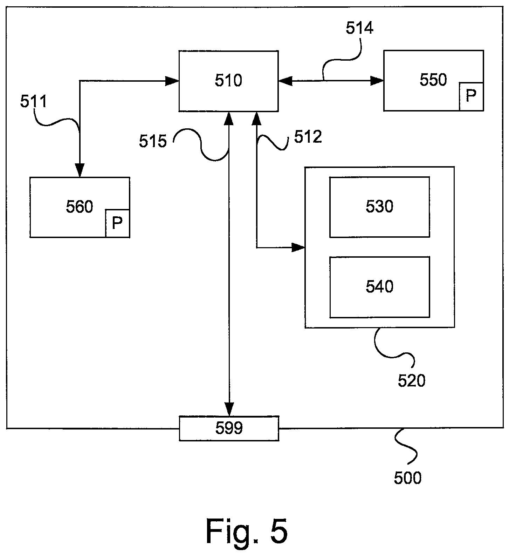

The first control unit 200 is adapted to continuously receiving measured values representing the temperature of the second fluid 282. The first control unit 200 may be a gear control unit. Alternatively, the first control unit 200 may be an engine control unit or any desired control unit in the vehicle 100. The first control unit 200 is described in more detail with reference to Figure 5 below.

The first control unit 200 is adapted to controlling the operation of the retarder 250 of the vehicle 100 as indicated in more detail herein, e.g. with reference to Figures 3 and 5.

The first control unit 200 is adapted to communication with first operating means 270 via a link 271. The first operating means 270 in this embodiment example are a proportional valve adapted to regulating the braking torque of the retarder 250. The first control unit 200 is adapted to regulating the braking torque of the retarder 250 on the basis of how detected temperatures of the second fluid 282 change over time. The first control unit 200 is adapted to using the first operating means 270 to control the operation of the retarder 250.

The first control unit 200 is adapted to communication with second operating means 275 via a link 272. The second operating means 275 in this embodiment example is a solenoid valve with on/off function which is adapted to disconnecting the retarder 250. Thus the second operating means 275 is adapted to effectively reducing the braking torque of the retarder 250 to substantially zero within a short time. The first control unit 200 is adapted to disconnecting the retarder 250 on the basis of how detected temperatures of the second fluid 282 change over time. The first control unit 200 is adapted to using the second operating means 275 to control the operation of the retarder 250. The first control unit 200 may effect emergency shutdown of the retarder 250 if measured temperatures of the second fluid 282 exceed a predetermined temperature. The first control unit is adapted to continuously determining the predetermined temperature according to the innovative method.

Said predetermined temperature may vary within a range of 180-250 degrees Celsius, with advantage within a range of 190-210 degrees Celsius.

A second control unit 210 is adapted to communication with the first control unit 200 via a link 201. The second control unit 210 may be detachably connected to the first control unit 200. The second control unit 210 may be a control unit external to the vehicle 100. The second control unit 210 may be adapted to performing the innovative method steps according to the invention. The second control unit 210 may be used to cross-load software to the first control unit 200, particularly software for effecting the innovative method. The second control unit 210 may alternatively be adapted to communication with the first control unit 200 via an internal network in the vehicle. The second control unit 210 may be adapted to performing substantially similar functions to the first control unit 200, e.g. continuously receiving signals containing detected temperatures of the second fluid 282 and determining a change in the detected temperature in order to alter the operation of the retarder when said temperature exceeds a predetermined temperature. The second control unit 210 may be adapted to continuously determining said predetermined temperature on the basis of the magnitude of the change per unit time.

Figure 3 is a schematic diagram example in which a graph b in the form of a broken line represents temperature limit values for altering the operation of the vehicle's retarder as a function of time t. A likewise schematic graph a in the form of a continuous line represents detected temperatures of the retarder's fluid as a function of time t.

Graph b reflects data generated by the control unit 200. Graph a reflects data generated by the fluid temperature sensor 260 (see Figure 2).

At time t0 the temperature of the second fluid 282 starts rising because the retarder during operation raises the temperature of the second fluid. At time t1 a level referred to as steady state is reached. This state continues for a time period t1-t2. During this state there is a substantially constant heat exchange between the first fluid 281 in the first circuit and the second fluid 282 in the second circuit.

At time t2, a fault occurs in the first circuit with the result that the second fluid 282 cannot be cooled as desirable. Such a fault may be line 231 or 232 becoming detached from the retarder cooler 240, whereupon the temperature of the second fluid 282 will start to rise.

The limit value for activating automatic control of the retarder depends on a change in the temperature of the second fluid 282 per unit time. Figure 3 depicts an example of how this limit value varies dynamically.

A particular point to note is that there is a safety margin M between graph a for the detected temperature of the second fluid 282 and graph b for the determined temperature.

When the fault occurs at time t2, graph b will start to drop, thereby lowering the level for activating automatic control of the retarder. This means that emergency shutdown of the retarder 250 is activated earlier than if the limit value had for example been static at a level corresponding to a limit value temperature during steady state operation of the retarder 250.

At time t3, graphs a and b intersect, whereupon the control unit alters the operation of the retarder 250. Emergency shutdown of the retarder 250 is thereupon activated. According to this embodiment example the braking torque of the retarder 250 is reduced to substantially zero.

Between time t0 and time t1 the predetermined value reflected by graph b is determined so that it initially decreases, but after a certain time it increases when the first control unit 200 may find that the temperature rise of the second fluid 282 is caused by warming due to natural reasons, i.e. that there seems to be no fault in the first circuit. The temperature of the second fluid 282 certainly rises, but the gradient of curve a decreases within this period of time.

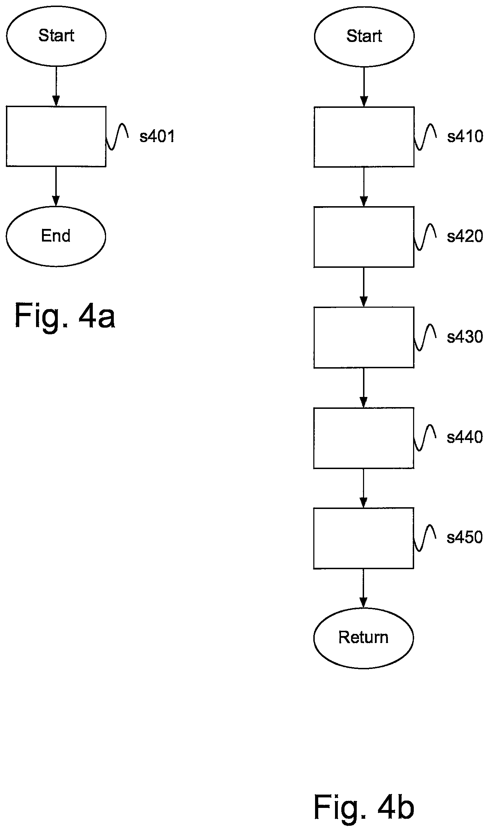

Figure 4a is a schematic flowchart of a method for controlling retarder operation of a motor vehicle, according to an embodiment of the invention. The method comprises a first step s401. Step s401 incorporates the step of continuously detecting temperatures of the second fluid 282, i.e. the retarder's fluid, which may for example be retarder oil. The temperature of the second fluid 282 may preferably be measured by the temperature sensor 260. Step s401 incorporates the step of continuously determining a change in the detected temperature. This determination is effected by the first control unit 200 and/or the second control unit 210. According to a version, a time derivative is calculated for any desired period of time, e.g. a latest period of five or ten hundredths of a second (0.05s or 0.10s), to make it possible to determine said change in the detected temperature of the second fluid 282. Step s401 incorporates the step of automatically disconnecting the operation of the retarder 250 when said temperature exceeds a predetermined temperature. According to this version, the retarder 250 is switched off when the temperature of the second fluid 282 in line 242 exceeds the predetermined temperature. Step s401 also incorporates the step of continuously determining said predetermined temperature on the basis of the magnitude of the change per unit time. A dynamic limit value for switching off the retarder 250 is thus provided according to the present invention. The method ends after step s401.

Figure 4b is a schematic flowchart of a method for controlling retarder operation of a motor vehicle, according to an embodiment of the invention.

The method comprises a first step s410. Step s410 incorporates the step of using the temperature sensor 260 to continuously detect the temperature of the second fluid 282 downstream of the retarder 250 at the inlet to the retarder cooler 240. Step s410 incorporates the step of continuously sending signals containing information about the temperature of the second fluid 282 to the first control unit 200 and/or the second control unit 210. Step s410 is followed by a step s420.

Method step s420 incorporates the step of receiving signals sent which contain information about the temperature of the second fluid 282. Step s420 incorporates the step of determining a difference in the temperature of the second fluid. This may be done by taking two relevant detected temperatures of the second fluid 282 which are separate in time in order to determine a time derivative with respect to these detected temperatures. According to this example, a gradient is determined for the two latest detected temperatures of the second fluid 282. Step s420 is followed by a step s430.

Method step s430 incorporates the step of determining a predetermined value, also called limit value, for activating emergency shutdown of the retarder 250. This limit value is associated with the temperature of the second fluid 282 and corresponds to a temperature of the latter at which the retarder's operation should be disconnected. The limit value is determined on the basis of the difference determined in the temperature of the second fluid 282. The limit value may be determined in various ways. One way is to use the function described with reference to Figure 3. Step s430 is followed by a step s440.

Method step s440 incorporates the step of comparing the latest detected temperature of the second fluid 282 in line 242 with the temperature determined in step s440 above, i.e. the temperature of the second fluid 282 is compared with the limit value determined. If the temperature of the second fluid 282 is equal to or greater than the limit value determined, it is found that a first state prevails. The first state means that emergency shutdown of the retarder 250 is desirable. If the temperature of the second fluid 282 is lower than the limit value determined, it is found that a second state prevails. The second state means that emergency shutdown of the retarder is not desirable. Step s440 is followed by a step s450.

Method step s450 incorporates the step of controlling the retarder 250 of the vehicle 100 on the basis of the first or second state found at step s440. If the first state is found, the retarder 250 is disconnected, i.e. thereby deactivating it. This may be done in various ways. One way is to generate one or more control signals of the control unit 200 for using the operating means 270 and/or 275 to reduce the braking torque of the retarder 250. Another way is to generate one or more control signals of the control unit 200 for using the operating means 275 to disconnect the retarder 250, thereby reducing the braking torque of the retarder 250 to substantially zero (0) within a short period of time. If the second state is found, the retarder continues to be activated according to a prevailing control mode of the control unit 200. After step s450 the method returns to step s410.

Figure 5 is a diagram of a version of a device 500. The control units 200 and 210 described with reference to Figure 2 may in a version comprise the device 500. The device 500 comprises a non-volatile memory 520, a data processing unit 510 and a read/write memory 550. The non-volatile memory 520 has a first memory element 530 in which a computer programme, e.g. an operating system, is stored for controlling the function of the device 500. The device 500 further comprises a bus controller, a serial communication port, I/O means, an A/D converter, a time and date input and transfer unit, an event counter and an interruption controller (not depicted). The non-volatile memory 520 has also a second memory element 540.

A computer programme P is provided which comprises routines for continuously determining a change in the detected temperature of the second fluid 282 and altering the retarder's operation when said temperature exceeds a predetermined temperature. The computer programme P comprises routines for continuously determining said predetermined temperature on the basis of the magnitude of the change per unit time according to the innovative method.

The programme P comprises routines for automatically disconnecting the retarder's operation when said temperature exceeds a predetermined temperature. The programme P comprises routines for disconnecting the vehicle's retarder 250 in appropriate situations, in accordance with the innovative method. The programme P may be stored in an executable form or in a compressed form in a memory 560 and/or in a read/write memory 550.

Where it is stated that the data processing unit 510 performs a certain function, it means that the data processing unit 510 effects a certain part of the programme which is stored in the memory 560 or a certain part of the programme which is stored in the read/write memory 550.

The data processing device 510 can communicate with a data port 599 via a data bus 515. The non-volatile memory 520 is intended for communication with the data processing unit 510 via a data bus 512. The separate memory 560 is intended to communicate with the data processing unit 510 via a data bus 511. The read/write memory 550 is intended to communicate with the data processing unit 510 via a data bus 514. The data port 599 may for example have the links 261, 271 and 272 connected to it (see Figure 2).

When data are received on the data port 599, they are stored temporarily in the second memory element 540. When input data received have been temporarily stored, the data processing unit 510 will be ready to effect code execution in a manner described above. According to a version, signals received on the data port 599 contain information about temperatures of the second fluid 282 downstream of the retarder 250 before cooling in the retarder cooler 240. The signals received on the data port 599 can be used by the device 500 for controlling the operation of the retarder 250 of the vehicle 100 according to the innovative method.

Parts of the methods herein described may be effected by the device 500 by means of the data processing unit 510 which runs the programme stored in the memory 560 or the read/write memory 550. When the device 500 runs the programme, methods herein described are executed.

The foregoing description of the preferred embodiments of the present invention is provided for illustrative and descriptive purposes. It is not intended to be exhaustive or to limit the invention to the variants described. Many modifications and variants will obviously be apparent to one skilled in the art. The embodiments have been chosen and described in order best to make clear the principles of the invention and its practical applications and hence to make it possible for specialists to understand the invention for various embodiments and with the various modifications appropriate to the intended use. The scope of protection is defined by the appended claims.

## Claims

1. A method for controlling retarder operation of a motor vehicle (100, 110), comprising the steps of:
- continuously detecting temperatures of the retarder's fluid (282);
- continuously determining a change in the detected temperature;
**characterised**
- **by** automatically disconnecting the operation of the retarder when said detected temperature exceeds a predetermined temperature; and
- by said predetermined temperature being determined continuously on the basis of the magnitude of the change per unit time.

2. A method according to claim 1, in which said predetermined temperature is determined dynamically on the basis of the magnitude of the change per unit time in such a way that said predetermined temperature is lowered when the magnitude of the change increases.

3. A method according to any one of the foregoing claims, in which said predetermined temperature may vary within a range of 180-250 degrees Celsius or a range of 190-210 degrees Celsius.

4. A method according to any one of the foregoing claims, whereby the predetermined temperature is determined so that there is a predetermined margin (M) between the predetermined temperature and the detected temperature of the retarder's fluid during steady state operation of the retarder (250).

5. A device for controlling retarder operation of a motor vehicle (100; 110), comprising
- receiving means (599) for continuously receiving signals containing information about detected temperatures of the retarder's fluid (282);
- calculation means (200; 210; 500; 510) for continuously determining a change in the detected temperature;
**characterised**
- **by** control means for automatically disconnecting the retarder's operation when said temperature exceeds a predetermined temperature, and
- by calculation means (200; 210; 500; 510) for continuously determining said predetermined temperature on the basis of the magnitude of the change per unit time.

6. A device according to claim 5, in which the calculation means (200; 210; 500; 510) are adapted to determining dynamically said predetermined temperature on the basis of the magnitude of the change per unit time in such a way that said predetermined temperature is lowered when the magnitude of the change increases.

7. A device according either of claims 5 and 6, in which said predetermined temperature may vary within a range of 180-250 degrees Celsius or a range of 190-210 degrees Celsius.

8. A device according to any one of claims 5-7, in which the calculation means (200; 210; 500; 510) are adapted to determining the predetermined temperature so that there is a predetermined margin (M) between the predetermined temperature and the detected temperature of the retarder's fluid during steady state operation of the retarder (250).

9. A motor vehicle (100; 110) comprising a device according to any one of claims 5-8.

10. A motor vehicle (100; 110) according to claim 9, which vehicle is any from among truck, bus or passenger car.

11. A computer programme (P) for controlling retarder operation of a motor vehicle (100; 110), which computer programme (P) comprises programme code stored on a computer-readable medium for causing an electronic control unit (200;500) or another computer (210;500) connected to the electronic control unit (200; 500) to perform the steps according to any one of claims 1-4.

12. A computer programme product comprising a programme code stored on a computer-readable medium for performing the method steps according to any one of claims 1-4, which computer programme is run on an electronic control unit (200; 500) or another computer (210; 500) connected to the electronic control unit (200; 500).

## Patentansprüche

1. Verfahren zur Steuerung des Betriebs eines Retarders eines Kraftfahrzeugs (100; 110), das die Schritte aufweist:
- kontinuierliches Erfassen der Temperaturen des Fluids (282) des Retarders;
- kontinuierliche Bestimmung einer Änderung der erfassten Temperatur; **gekennzeichnet**
- **durch** automatisches Abbrechen des Betriebs des Retarders, wenn die erfasste Temperatur eine vorgegebene Temperatur überschreitet; und
- **durch** kontinuierliches Bestimmen der vorgegebenen Temperatur auf Basis der Größe der Änderung pro Zeiteinheit.

2. Verfahren nach Anspruch 1, wobei die vorgegebene Temperatur auf Basis der Größe der Änderung pro Zeiteinheit dynamisch so bestimmt wird, dass die vorgegebene Temperatur gesenkt wird, wenn die Größe der Änderung zunimmt.

3. Verfahren nach einem der vorigen Ansprüche, wobei sich die vorgegebene Temperatur innerhalb eines Bereichs von 180 bis 250 °C oder eines Bereichs von 190 bis 210 °C ändern kann.

4. Verfahren nach einem der vorigen Ansprüche, wobei die vorgegebene Temperatur so bestimmt wird, dass eine vorgegebene Differenz (M) zwischen der vorgegebenen Temperatur und der erfassten Temperatur des Retarder-Fluids während des stationären Betriebs des Retarders (250) vorliegt.

5. Vorrichtung zur Steuerung des Betriebs eines Retarders eines Kraftfahrzeugs (100, 110) aufweisend
- Empfangsmittel (599) zum kontinuierlichen Empfangen von Signalen, die Informationen über die erfassten Temperaturen des Fluids (282) des Retarders enthalten;
- Berechnungsmittel (200; 210; 500; 510) kontinuierlichen Bestimmung einer Änderung der erfassten Temperatur;
**gekennzeichnet**
- **durch** Steuerungsmittel zum automatischen Abbrechen des Betriebs des Retarders, wenn die Temperatur eine vorgegebene Temperatur überschreitet; und
- **durch** Berechnungsmittel (200; 210; 500; 510) zur kontinuierlichen Bestimmung der vorgegebenen Temperatur auf Basis der Größe der Änderung pro Zeiteinheit.

6. Vorrichtung nach Anspruch 5, wobei die Berechnungsmittel (200; 210; 500; 510) dazu eingerichtet sind, die vorgegebene Temperatur auf Basis der Größe der Änderung pro Zeiteinheit dynamisch so zu bestimmen, dass die vorgegebene Temperatur gesenkt wird, wenn die Größe der Änderung zunimmt.

7. Vorrichtung nach einem der Ansprüche 5 oder 6, wobei sich die vorgegebene Temperatur innerhalb eines Bereichs von 180 bis 250 °C oder eines Bereichs von 190 bis 210 °C ändern kann.

8. Vorrichtung nach einem der Ansprüche 5 bis 7, wobei die die Berechnungsmittel (200; 210; 500; 510) so eingerichtet sind, dass sie die vorgegebene Temperatur so bestimmen, dass eine vorgegebene Differenz (M) zwischen der vorgegebenen Temperatur und der erfassten Temperatur des Retarder-Fluids während des stationären Betriebs des Retarders (250) vorliegt.

9. Kraftfahrzeug (100; 110), das eine Vorrichtung nach einen der Ansprüche 5 bis 8 aufweist.

10. Kraftfahrzeug (100; 110) nach Anspruch 9, wobei das Fahrzeug entweder ein Lastkraftwagen, ein Omnibus oder ein Personenkraftwagen ist.

11. Computerprogramm (P) zur Steuerung des Betriebs eines Retarders eines Kraftfahrzeugs (100; 110), wobei das Computerprogramm (P) einen auf einem computerlesbaren Medium gespeicherten Programmcode aufweist, um eine elektronische Steuereinheit (200; 500) oder einen mit der elektronischen Steuereinheit (200; 500) verbundenen anderen Computer (210; 500) die Schritte nach einem der Ansprüche 1 bis 4 auszuführen.

12. Computerprogrammprodukt mit einem auf einem computerlesbaren Medium gespeicherten Programmcode zum Ausführen der Verfahrensschritte nach einem der Ansprüche 1 bis 4, wobei das Computerprogramm auf der elektronischen Steuereinheit (200; 500) oder einem mit der elektronischen Steuereinheit (200; 500) verbundenen anderen Computer (210; 500) abläuft.

## Revendications

1. Procédé destiné à commander le fonctionnement d'un ralentisseur d'un véhicule automobile (100, 110), comprenant les étapes consistant à :
- détecter en continu des températures du fluide du ralentisseur (282) ;
- détecter en continu une modification dans la température détectée ;
caractérisé
- en déconnectant automatiquement le fonctionnement du ralentisseur lorsque ladite température détectée dépasse une température prédéterminée ; et
- par le fait que ladite température prédéterminée est déterminée en continu sur la base de l'amplitude de la variation par unité de temps.

2. Procédé selon la revendication 1, dans lequel ladite température prédéterminée est déterminée de manière dynamique sur la base de l'amplitude de la variation par unité de temps, de telle sorte que ladite température prédéterminée est abaissée lorsque l'amplitude de la variation augmente.

3. Procédé selon l'une quelconque des revendications précédentes, dans lequel ladite température prédéterminée peut varier dans une plage de 180 à 250 degrés Celsius ou dans une plage de 190 à 210 degrés Celsius.

4. Procédé selon l'une quelconque des revendications précédentes, dans lequel la température prédéterminée est déterminée de telle sorte qu'il y ait une marge prédéterminée (M) entre la température prédéterminée et la température détectée du fluide du retardateur pendant le fonctionnement en régime permanent du ralentisseur (250).

5. Dispositif destiné à commander le fonctionnement d'un ralentisseur d'un véhicule automobile (100 ; 110), comprenant
- des moyens de réception (599) pour recevoir en continu des signaux contenant des informations relatives aux températures détectées du fluide du ralentisseur (282) ;
- des moyens de calcul (200 ; 210 ; 500 ; 510) pour déterminer en continu une variation de la température détectée ;
**caractérisé**
- **par** des moyens de commande pour déconnecter automatiquement le fonctionnement du ralentisseur lorsque ladite température dépasse une température prédéterminée, et
- par des moyens de calcul (200 ; 210 ; 500 ; 510) pour déterminer en continu ladite température prédéterminée sur la base de l'amplitude de la variation par unité de temps.

6. Dispositif selon la revendication 5, dans lequel les moyens de calcul (200 ; 210 ; 500 ; 510) sont adaptés pour déterminer de manière dynamique ladite température prédéterminée sur la base de l'amplitude de la variation par unité de temps, de telle sorte que ladite température prédéterminée soit abaissée lorsque l'amplitude de la variation augmente.

7. Dispositif selon l'une ou l'autre des revendications 5 et 6, dans lequel ladite température prédéterminée peut varier dans une plage de 180 à 250 degrés Celsius ou de 190 à 210 degrés Celsius.

8. Dispositif selon l'une quelconque des revendications 5-7, dans lequel les moyens de calcul (200 ; 210 ; 500 ; 510) sont adaptés pour déterminer la température prédéterminée de sorte qu'il y ait une marge prédéterminée (M) entre la température prédéterminée et la température détectée du fluide du ralentisseur pendant le fonctionnement en régime permanent du ralentisseur (250).

9. Véhicule à moteur (100 ; 110) comprenant un dispositif selon l'une quelconque des revendications 5 à 8.

10. Véhicule à moteur (100 ; 110) selon la revendication 9, lequel véhicule est de forme quelconque parmi un camion, un bus ou une voiture.

11. Programme informatique (P) permettant de commander le fonctionnement d'un ralentisseur d'un véhicule automobile (100 ; 110), lequel programme informatique (P) comprend un code de programme stocké sur un support lisible par ordinateur pour amener une unité de commande électronique (200 ; 500) ou un autre ordinateur (210 ; 500) connecté à l'unité de commande électronique (200 ; 500) à effectuer les étapes selon l'une quelconque des revendications 1-4.

12. Produit de programme informatique contenant un code de programme stocké sur un support lisible par ordinateur pour l'exécution des étapes de procédé selon l'une quelconque des revendications 1 à 4 lorsque ledit programme informatique est exécuté sur une unité de commande électronique (200 ; 500) ou un autre ordinateur (210 ; 500) connecté à l'unité de commande électronique (200 ; 500).
